# EUROPEAN PATENT APPLICATION

(11) **EP 4 850 896 A1**
(43) Date of publication of application: **09.12.2026**
(21) Application number: 25864575.3
(22) Date of filing: 15.07.2025
(51) Int. Cl.: B29C 65/50, B29C 65/78, B29C 65/00, B65H 5/28, B65H 5/06, B65H 3/08, B29D 99/00, H01M 50/183, H01M 50/105

(54) **TAPE SUPPLY UNIT, APPARATUS FOR MANUFACTURING POUCH FOR SECONDARY BATTERY USING SAME, AND METHOD FOR MANUFACTURING POUCH FOR SECONDARY BATTERY USING SAME**

(30) Priority: 17.12.2024 KR 20240188422
(71) Applicant: LG ENERGY SOLUTION, LTD., Seoul 07335 (KR)
(72) Inventor: KIM, Seong Yong, Yuseong-gu Daejeon 34122 (KR); KIM, Sang Jih, Yuseong-gu Daejeon 34122 (KR); OH, Sung Hun, Yuseong-gu Daejeon 34122 (KR); HYUN, Je Min, Yuseong-gu Daejeon 34122 (KR); MOON, Gun Ho, Yuseong-gu Daejeon 34122 (KR)
(74) Representative: Plasseraud IP
(86) International application number: PCT/KR2025/010345
(87) International publication number: WO 2026/134501

(57) **Abstract**

The present disclosure relates to a tape supply unit, an apparatus for manufacturing a pouch for a secondary battery using the same and a method for manufacturing a pouch for a secondary battery using the same, and more particularly, to a tape supply unit for simplifying the structure and manufacturing process and improving process efficiency and productivity, and an apparatus for manufacturing a pouch for a secondary battery using the same and a method for manufacturing a pouch for a secondary battery using the same. The tape supply unit according to the present disclosure is configured to supply an adhesive tape for attaching a sealing portion to a pouch body accommodating an electrode assembly, and includes a tape feed supply unit configured to supply a tape feed including the adhesive tape and a release sheet to which the adhesive tape is attached, and a vacuum suction unit configured to hold the release sheet with vacuum and move it to the sealing portion to attach the adhesive tape to the sealing portion.

## Description

### TECHNICAL FIELD

### CROSS-REFERENCE TO RELATED APPLICATIONS

This application is based on and claims priority from Korean Patent Application No. 10-2024-0188422 filed on December 17, 2024 with the Korean Intellectual Property Office, the disclosure of which is incorporated herein in its entirety by reference.

### TECHNICAL FIELD

The present disclosure relates to a tape supply unit, an apparatus for manufacturing a pouch for a secondary battery using the same and a method for manufacturing a pouch for a secondary battery using the same, and more particularly, to a tape supply unit for simplifying the structure and manufacturing process and improving process efficiency and productivity, and an apparatus for manufacturing a pouch for a secondary battery using the same and a method for manufacturing a pouch for a secondary battery using the same.

### BACKGROUND ART

In general, the types of secondary batteries include nickel cadmium batteries, nickel hydrogen batteries, lithium-ion batteries and lithium-ion polymer batteries. Secondary batteries are used in not only small products such as digital cameras, P-DVDs, MP3Ps, mobile phones, PDAs, portable game devices, power tools and E-bikes, but also large products requiring high output such as electric vehicles or hybrid electric vehicles and energy storage systems that store surplus power or new renewable energy and energy storage systems for backup.

To manufacture secondary batteries, an electrode active material slurry is applied to a positive current collector and a negative current collector to manufacture a positive electrode and a negative electrode, and the positive electrode and the negative electrode are stacked on two sides of a separator to form an electrode assembly of a predetermined shape. Additionally, the electrode assembly is housed in a battery case, an electrolyte solution (an electrolyte) is injected into the battery case, and the battery case is sealed.

Secondary batteries may be classified into a pouch type and a can type according to the material of the battery case accommodating the electrode assembly.

The pouch type is configured to accommodate the electrode assembly in a pouch made of a flexible polymer material.

The electrode assembly may include the positive electrode and the negative electrode wound or stacked in a direction with the separator interposed between the positive electrode and the negative electrode, and the pouch may be provided by joining a lower sheet and an upper sheet that work together to define an accommodation space for accommodating the electrode assembly inside.

The pouch may be manufactured by joining the sides (edges) of the lower sheet and the upper sheet, and as the sides of the lower sheet and the upper sheet are joined together, a sealing portion is formed at the side (edge) of the pouch.

However, when the sealing portion is formed at the side of the pouch, an additional space for the sealing portion is needed, which reduces space utilization and the degree of freedom in design, making it difficult to maximize the volumetric efficiency or volumetric energy density of the secondary battery.

To minimize the dead volume occupied by the sealing portion of the pouch, a method that folds the sealing portion of the pouch, and bonds the folded sealing portion to the pouch using an adhesive (for example, a double-sided tape) has been proposed.

However, because the processes for folding and bonding the sealing portion of the pouch are performed by a folding device and a bonding device, respectively, it makes the structure and manufacturing process complex, and reduces space utilization and the degree of freedom in design as well as process efficiency and productivity.

Accordingly, recently, many studies are being conducted to simplify the processes for folding and bonding the sealing portion of the pouch and improve space utilization and the degree of freedom in design, but efforts toward development are still needed.

### DISCLOSURE

### TECHNICAL PROBLEM

The present disclosure is designed to solve the above-described problems, and therefore the present disclosure is directed to providing a tape supply unit for improving space utilization and the degree of freedom in design by minimizing the space occupied by a sealing portion, and an apparatus and method for manufacturing a pouch for a secondary battery using the same.

The present disclosure is further directed to providing a tape supply unit for reducing the amount of adhesive tape used and minimizing errors in attaching the adhesive tape, and an apparatus and method for manufacturing a pouch for a secondary battery using the same.

The present disclosure is further directed to providing a tape supply unit for simplifying the processes for folding and bonding the sealing portion of the pouch and improving space utilization and the degree of freedom in design, and an apparatus and method for manufacturing a pouch for a secondary battery using the same.

The present disclosure is further directed to providing a tape supply unit for standardizing the size and shape of the pouch and reducing the pouch manufacturing time, and an apparatus and method for manufacturing a pouch for a secondary battery using the same.

The present disclosure is further directed to providing a tape supply unit for improving uniformity in folding and bonding of the sealing portion and enhancing safety and reliability, and an apparatus and method for manufacturing a pouch for a secondary battery using the same.

### TECHNICAL SOLUTION

To solve the above-described problems, a tape supply unit according to a first embodiment of the present disclosure is configured to supply an adhesive tape for attaching a sealing portion to a pouch body accommodating an electrode assembly, and may include a tape feed supply unit configured to supply a tape feed including the adhesive tape and a release sheet to which the adhesive tape is attached, and a vacuum suction unit configured to hold the release sheet with vacuum and move it to the sealing portion to attach the adhesive tape to the sealing portion.

The adhesive tape may be attached to one surface of the release sheet, and the vacuum suction unit may hold other surface of the release sheet with vacuum.

The tape feed supply unit may include a supply roll on which the tape feed is wound, and an unwinding gripper configured to unwind the tape feed by moving while gripping an end of the tape feed wound onto the supply roll.

The tape feed supply unit may further include a cutter configured to cut the unwound tape feed to separate it from the supply roll in a state that the vacuum suction unit holds the release sheet with vacuum.

Said one surface of the release sheet may be divided into a first area where the adhesive tape is attached and a second area which is an area other than the first area, and the cutter may cut the second area.

Said one surface of the adhesive tape may be attached to the sealing portion, and the other surface of the adhesive tape may be attached to one surface of the release sheet.

The tape supply unit according to the first embodiment of the present disclosure may further include a separation gripper configured to separate the release sheet attached to the other surface of the adhesive tape from the adhesive tape in a state that said one surface of the adhesive tape is attached to the sealing portion.

Said one surface of the release sheet may be divided into a first area where the adhesive tape is attached and a second area which is an area other than the first area, and the separation gripper may separate the release sheet from the adhesive tape by moving while gripping the second area and the other surface of the release sheet.

In a state that the vacuum suction unit holds the release sheet with vacuum, the vacuum suction unit may be disposed such that it extends in a direction parallel to a length direction of the release sheet.

The vacuum suction unit may include a plurality of suction pads arranged at a preset interval along a direction parallel to a length direction of the release sheet and configured to apply a vacuum pressure to the release sheet.

The vacuum pressure applied to the release sheet may be removed when the adhesive tape is attached to the sealing portion.

To solve the above-described problems, an apparatus for manufacturing a pouch for a secondary battery according to a second embodiment of the present disclosure is configured to manufacture the pouch for the secondary battery including a pouch body accommodating an electrode assembly and a sealing portion disposed at the pouch body, and includes a tape supply unit configured to supply an adhesive tape for attaching the sealing portion to the pouch body, and a pressing unit configured to press the sealing portion to attach other surface of the adhesive tape to the pouch body in a state that one surface of the adhesive tape is attached to the sealing portion by the tape supply unit, and the tape supply unit may include a tape feed supply unit configured to supply a tape feed including the adhesive tape and a release sheet to which the adhesive tape is attached, and a vacuum suction unit configured to hold the release sheet with vacuum and move it to the sealing portion to attach the adhesive tape to the sealing portion.

The apparatus for manufacturing the pouch for the secondary battery according to the second embodiment of the present disclosure may further include a separation gripper configured to separate the release sheet attached to the other surface of the adhesive tape from the adhesive tape in a state that said one surface of the adhesive tape is attached to the sealing portion.

In a state that said one surface of the adhesive tape is attached to the sealing portion, the pressing unit may fold the sealing portion so that the other surface of the adhesive tape faces the pouch body, and bring the sealing portion into close contact with the pouch body to attach the other surface of the adhesive tape to the pouch body.

To solve the above-described problems, a method for manufacturing a pouch for a secondary battery according to a third embodiment of the present disclosure is used to manufacture the pouch for the secondary battery including a pouch body accommodating an electrode assembly and a sealing portion disposed at the pouch body, and may include a tape feed supply step of supplying a tape feed including an adhesive tape and a release sheet having one surface to which the adhesive tape is attached, and an adhesive tape transfer step of holding, by a vacuum suction unit, other surface of the release sheet with vacuum and moving it to the sealing portion to attach one surface of the adhesive tape to the sealing portion.

The method for manufacturing the pouch for the secondary battery according to the third embodiment of the present disclosure may further include an adhesive tape other surface attachment step of pressing the sealing portion to attach other surface of the adhesive tape to the pouch body in a state that said one surface of the adhesive tape is attached to the sealing portion.

The tape feed supply step may include a tape feed unwinding step of unwinding the wound tape feed, a release sheet holding step of holding, by the vacuum suction unit, the other surface of the release sheet with vacuum, and a release sheet cutting step of cutting the release sheet in a state that the other surface of the release sheet is held with vacuum.

The adhesive tape transfer step may include an adhesive tape one surface attachment step of holding, by the vacuum suction unit, the other surface of the release sheet with vacuum and transporting it to the sealing portion to attach said one surface of the adhesive tape to the sealing portion, and a vacuum pressure removal step of removing a vacuum pressure applied to the other surface of the release sheet.

The adhesive tape transfer step may further include a release sheet separation step of separating the release sheet from the adhesive tape in a state that said one surface of the adhesive tape is attached to the sealing portion.

### ADVANTAGEOUS EFFECTS

The tape supply unit according to the present disclosure and the apparatus and method for manufacturing the pouch for the secondary battery using the same have an effect of improving space utilization and the degree of freedom in design by minimizing the space occupied by the sealing portion.

Furthermore, the present disclosure has an effect of reducing the amount of adhesive tape used and minimizing errors in attaching the adhesive tape.

Additionally, the present disclosure has an effect of simplifying the processes for folding and bonding the sealing portion of the pouch and improving space utilization and the degree of freedom in design.

In addition, the present disclosure has an effect of standardizing the size and shape of the pouch and reducing the pouch manufacturing time.

Moreover, the present disclosure has an effect of improving uniformity in folding and bonding of the sealing portion and enhancing safety and reliability.

### BRIEF DESCRIPTION OF THE DRAWINGS

FIG. 1 is a diagram showing a tape feed in a tape supply unit according to a first embodiment of the present disclosure.
FIG. 2 is a diagram showing a surface of a release sheet in the tape supply unit according to the first embodiment of the present disclosure.
FIG. 3 is a diagram showing that an unwinding gripper of the tape supply unit according to the first embodiment of the present disclosure unwinds the tape feed.
FIG. 4 is a diagram showing that a vacuum suction unit of the tape supply unit according to the first embodiment of the present disclosure moves down and approaches the release sheet.
FIG. 5 is a diagram showing that a cutter of the tape supply unit according to the first embodiment of the present disclosure cuts the release sheet.
FIG. 6 is a diagram showing that the vacuum suction unit of the tape supply unit according to the first embodiment of the present disclosure transports the tape feed to a sealing portion.
FIG. 7 is a diagram showing that the vacuum suction unit of the tape supply unit according to the first embodiment of the present disclosure attaches an adhesive tape to the sealing portion.
FIG. 8 is a diagram showing that a separation gripper of the tape supply unit according to the first embodiment of the present disclosure separates the release sheet from the adhesive tape.
FIG. 9 is a diagram showing the adhesive tape attached to the sealing portion in the tape supply unit according to the first embodiment of the present disclosure.
FIG. 10 is a diagram illustrating a pressing unit of an apparatus for manufacturing a pouch for a secondary battery according to a second embodiment of the present disclosure.
FIG. 11 is a diagram showing that the pressing unit moves up to bend a first sealing portion in FIG. 10.
FIG. 12 is a diagram showing that the pressing unit moves toward a pouch body to attach the adhesive tape to the pouch body in FIG. 11.
FIG. 13 is a diagram illustrating a pouch for a secondary battery manufactured by the apparatus for manufacturing the pouch for the secondary battery according to the second embodiment of the present disclosure.
FIG. 14 is a flowchart of a method for manufacturing a pouch for a secondary battery according to a third embodiment of the present disclosure.
FIG. 15 is a flowchart of a tape feed unwinding step in the method for manufacturing the pouch for the secondary battery according to the third embodiment of the present disclosure.

### BEST MODE

Hereinafter, the exemplary embodiments of the present disclosure will be described with reference to the accompanying drawings in sufficient detail to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

### (First embodiment)

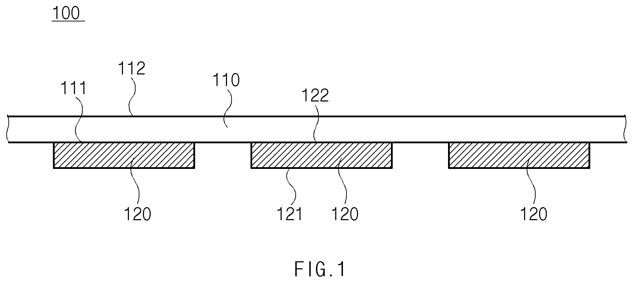

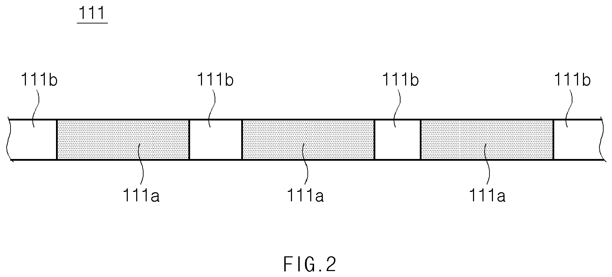

FIG. 1 is a diagram showing a tape feed in a tape supply unit according to a first embodiment of the present disclosure, and FIG. 2 is a diagram showing a surface of a release sheet in the tape supply unit according to the first embodiment of the present disclosure.

Referring to FIGS. 1 and 2, the tape feed 100 supplied by the tape supply unit 1 according to the first embodiment of the present disclosure may include a release sheet 110 and an adhesive tape 120.

The tape feed 100 may include the release sheet 110 with the adhesive tape 120 attached thereto. That is, the adhesive tape 120 may be supplied in a state of being attached to the release sheet 110.

The adhesive tape 120 may be a double-sided tape. Accordingly, the adhesive tape 120 may include one surface 121 including an adhesive material, and the other surface 122 opposite one surface 121, the other surface 122 including an adhesive material.

When the tape feed 100 is supplied, one surface 121 of the adhesive tape may be exposed to the outside, and the other surface 122 of the adhesive tape may be in a state of being attached to the release sheet 110. In this instance, when a vacuum suction unit 300 as described below transports the tape feed 100, one surface 121 of the adhesive tape may be attached to a sealing portion 12 of a pouch body 11.

The release sheet 110 is where the adhesive tape 120 is attached, and may include one surface 111 to which one surface 121 of the adhesive tape is attached, and the other surface 112 opposite one surface 111. In this instance, the vacuum suction unit 300 as described below may hold the other surface 112 of the release sheet with vacuum.

As shown in FIG. 2, one surface 111 of the release sheet may be divided into a first area 111a and a second area 111b. The first area 111a may refer to an area where the adhesive tape 120 is attached, and the second area 111b may refer to the remaining area of one surface 111 of the release sheet, excluding the first area 111a.

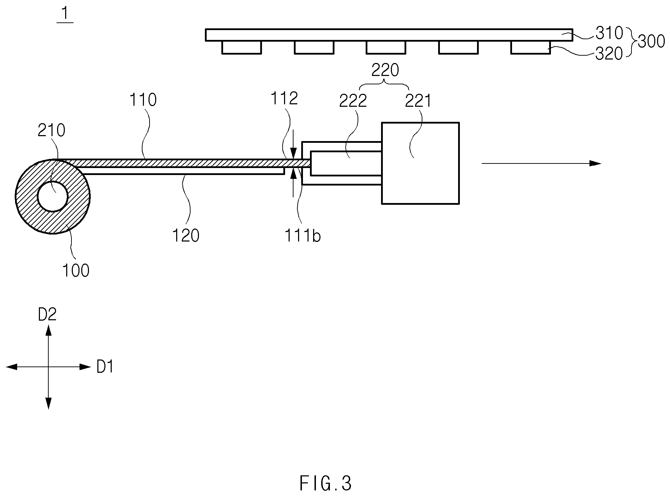

FIG. 3 is a diagram showing that an unwinding gripper of the tape supply unit according to the first embodiment of the present disclosure unwinds the tape feed.

Referring to FIG. 3, the tape supply unit 1 according to the first embodiment of the present disclosure is configured to supply the adhesive tape 120 for attaching the sealing portion 12 to the pouch body 11 accommodating an electrode assembly 20, and may include a tape feed supply unit 200 and the vacuum suction unit 300.

The tape feed supply unit 200 may supply the tape feed 100, and include a supply roll 210 and the unwinding gripper 220.

The tape feed 100 may be wound onto the supply roll 210. As described above, the present disclosure may have an advantageous effect of minimizing the facility and space for supplying the tape feed 100 by providing the tape feed 100 wound in a roll shape. However, according to another embodiment of the present disclosure, the tape feed may not be wound onto the supply roll, and the tape feed may be supplied in a straight line shape using a conveyor.

The unwinding gripper 220 may unwind the wound tape feed 100 by moving while gripping the end of the tape feed 100 wound onto the supply roll 210.

The unwinding gripper 220 may include an unwinding gripper body 221 and an unwinding grip member 222.

The unwinding gripper body 221 may move in a straight line along a first direction D1. The linear movement of the unwinding gripper body 221 may be made in various ways depending on the required conditions and design specifications.

As an example, the linear movement of the unwinding gripper body 221 in the first direction D1 may be made by a commonly used linear motion system such as a motor, a solenoid or a linear motor. According to another embodiment of the present disclosure, the unwinding gripper body 221 may be configure to move in a straight line along the first direction D1 in response to a lead screw's rotation.

The unwinding grip member 222 may be connected to the unwinding gripper body 221 and movably disposed along a second direction D2 perpendicular to the first direction D1 with respect to the unwinding gripper body 221.

The unwinding grip member 222 may include a pair of unwinding grip members in the second direction D2. Each of the unwinding grip members 222 may grip the release sheet 110 as they get closer to each other along the second direction D2 with the release sheet 110 positioned between them.

In a state that the unwinding grip members 222 grip the release sheet 110, the unwinding gripper body 221 may unwind the tape feed 100 by moving in the first direction D1.

The vacuum suction unit 300 may hold the release sheet 110 with vacuum and move it to the sealing portion 12 to attach the release sheet 110 to the sealing portion 12.

In this instance, in a state that the vacuum suction unit 300 holds the release sheet 110 with vacuum, the vacuum suction unit 300 may be disposed such that it extends in a direction parallel to the length direction of the release sheet 110.

Because a target adhesive surface 12c of the sealing portion 12 to which the adhesive tape 120 according to the present disclosure is attached is flat, the adhesive tape 120 in a state of being stretched tight is preferably attached to the target adhesive surface 12c.

Because the vacuum suction unit 300 of the present disclosure extends in the direction parallel to the length direction of the release sheet 110, the vacuum suction unit 300 may apply vacuum pressure along the length direction of the release sheet 110.

In this instance, as the release sheet 110 may be kept in stretched state (unwound state) by the unwinding gripper 220, the vacuum suction unit 300 may hold the release sheet 110 with vacuum in such a state that the release sheet 110 is stretched tight.

The vacuum suction unit 300 may include a suction unit body 310, a suction pad 320 and a vacuum block (not shown).

The suction unit body 310 may extend parallel to the length direction of the release sheet 110. The suction unit body 310 may be connected to a plurality of suction pads 320, and each of the suction pads 320 may be secured to the suction unit body 310.

The suction pad 320 may be connected to the suction unit body 310 and apply the vacuum pressure to the release sheet 110.

The vacuum block (not shown) may generate the vacuum pressure, and the suction pad 320 may receive the vacuum pressure generated from the vacuum block and apply it to the release sheet 110.

The plurality of suction pads 320 may be arranged at a preset interval along the direction parallel to the length direction of the release sheet 110, and each of the suction pads 320 may apply the vacuum pressure to the other surface 112 of the release sheet.

Because the suction pads 320 are spaced apart from each other in the direction parallel to the length direction of the release sheet 110, the vacuum pressure applied to the other surface 112 of the release sheet may be applied to the plurality of areas on the other surface 112 of the release sheet. Accordingly, each of the areas to which the vacuum pressure is applied may be arranged at the preset interval along the length direction of the release sheet 110.

As the release sheet 110 may be kept in stretched state (unwound state) by the unwinding gripper 220, the suction pad 320 may hold the release sheet 110 with vacuum in a state that the release sheet 110 is stretched tight. Accordingly, the present disclosure has an effect that the adhesive tape 120 attached to one surface 111 of the release sheet may be attached to the sealing portion 12 in a state that the adhesive tape 120 is stretched tight.

When the adhesive tape 120 is attached to the sealing portion 12, the vacuum pressure applied to the release sheet 110 may be removed. In addition, when the vacuum pressure applied to the release sheet 110 by the suction pad 320 is removed, the vacuum suction unit 300 may be moved away from the release sheet 110.

Meanwhile, the tape feed supply unit 200 of the tape supply unit 1 according to the first embodiment of the present disclosure may further include a cutter 230.

In a state that the vacuum suction unit 300 holds the release sheet 110 with vacuum, the cutter 230 may cut the tape feed 100 unwound by the unwinding gripper 220 to separate the tape feed 100 from the supply roll 210.

Meanwhile, because one surface 121 of the adhesive tape includes the adhesive material, when the cutter 230 cuts the adhesive tape 120 attached to the first area 111a, the cutter 230 may contact one surface 121 of the adhesive tape, and the cutting force may be reduced. Accordingly, when the cutter 230 cuts the second area 111b of one surface 111 of the release sheet, the release sheet 110 with the adhesive tape 120 attached thereto may be stably separated from the supply roll 210.

Meanwhile, the tape supply unit 1 according to the first embodiment of the present disclosure may further include a separation gripper 400.

The separation gripper 400 may separate the release sheet 110 attached to the other surface 122 of the adhesive tape from the adhesive tape 120 in a state that one surface 121 of the adhesive tape is attached to the sealing portion 12. Specifically, the separation gripper 400 may separate the release sheet 110 from the adhesive tape 120 by moving while gripping the second area 111b and the other surface 112 of the release sheet.

The separation gripper 400 may include a separation gripper body 410 and a separation grip member 420.

The separation gripper body 410 may be movably disposed and make a linear and/or curved movement. The movement of the separation gripper body 410 may be made in various ways depending on the required conditions and design specifications.

The separation grip member 420 may be connected to the separation gripper body 410 and movably disposed along the separation gripper body 410.

The separation grip member 420 may include a pair of separation grip members spaced apart from each other. Each of the unwinding grip members 222 may grip the release sheet 110 as they get closer to each other with the release sheet 110 positioned therebetween.

When the vacuum suction unit 300 is moved away from the release sheet 110, the separation grip member 420 may separate the release sheet 110 from the adhesive tape 120 by moving while gripping the second area 111b of one surface of the release sheet 110 and the other surface 112 of the release sheet. Through this, when the separation grip member 420 releases the grip on the release sheet 110 after separating the release sheet 110 from the adhesive tape 120, the separation grip member 420 may be easily separated from the release sheet 110.

Hereinafter, the process for supplying the adhesive tape 120 by the tape supply unit 1 according to the first embodiment of the present disclosure will be described.

Meanwhile, in this specification, the first direction D1 may refer to a horizontal direction, and the second direction D2 may refer to a vertical direction, but is not limited thereto, and a direction in which the release sheet 110 extends may be the first direction D1, and the second direction D2 may refer to a direction perpendicular to the first direction.

Referring back to FIG. 3, when the tape feed 100 is wound onto the supply roll 210, the unwinding gripper 220 may unwind the wound tape feed 100 by moving in the first direction D1 while gripping the release sheet 110.

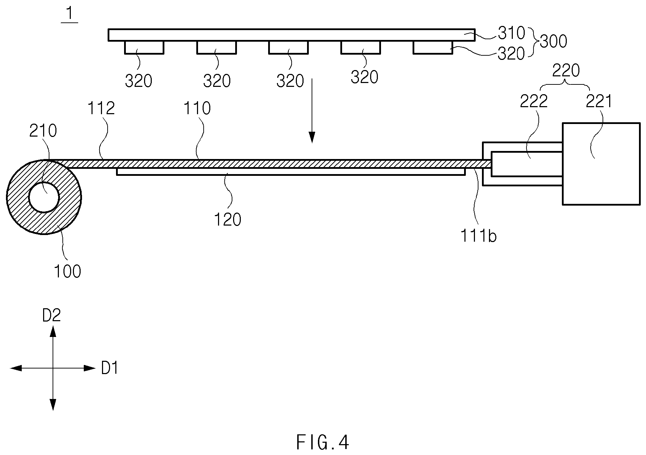

FIG. 4 is a diagram showing that the vacuum suction unit of the tape supply unit according to the first embodiment of the present disclosure moves down and approaches the release sheet.

Referring to FIG. 4, the suction unit body 310 disposed parallel to the release sheet 110 may move down along the second direction D2. In this instance, the suction pad 320 may be disposed at the suction unit body 310 such that it faces the release sheet 110.

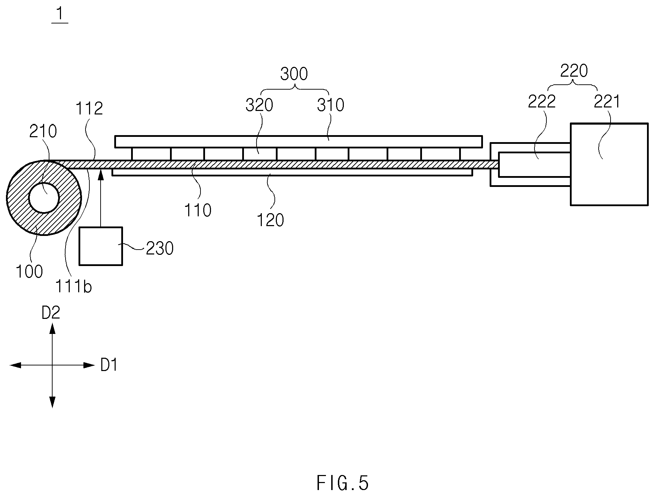

FIG. 5 is a diagram showing that the cutter of the tape supply unit according to the first embodiment of the present disclosure cuts the release sheet.

Referring to FIG. 5, the cutter 230 may cut the tape feed 100 in a state that the tape feed 100 is held with vacuum. Specifically, in a state that the unwinding gripper 220 grips the release sheet 110 and the vacuum suction unit 300 holds the other surface 112 of the release sheet with vacuum, the cutter 230 may cut the release sheet 110. In this instance, the cutter 230 may cut the second area 111b of the other surface 112 of the release sheet.

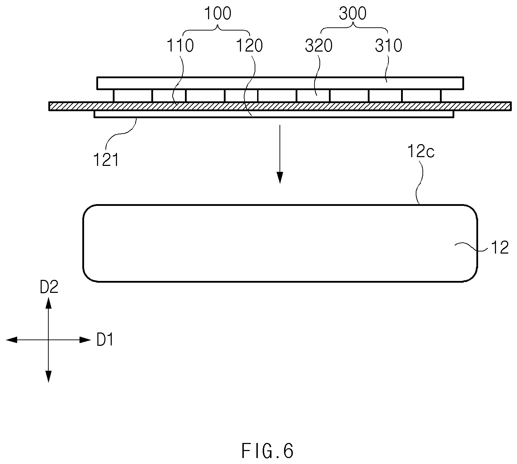

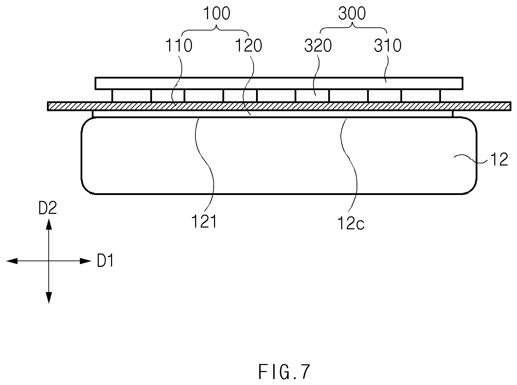

FIG. 6 is a diagram showing that the vacuum suction unit of the tape supply unit according to the first embodiment of the present disclosure transports the tape feed to the sealing portion, and FIG. 7 is a diagram showing that the vacuum suction unit of the tape supply unit according to the first embodiment of the present disclosure attaches the adhesive tape to the sealing portion.

Referring to FIGS. 6 and 7, the vacuum suction unit 300 may transport the cut tape feed 100 to the sealing portion 12, and the vacuum suction unit 300 may move down along the second direction D2 to attach the adhesive tape 120 to the sealing portion 12. Specifically, one surface 121 of the adhesive tape may be attached to the target adhesive surface 12c of the sealing portion 12.

In addition, after one surface 121 of the adhesive tape is attached to the sealing portion 12, when the vacuum pressure applied to the other surface 112 of the release sheet is removed, the vacuum suction unit 300 and the release sheet 110 may be debonded.

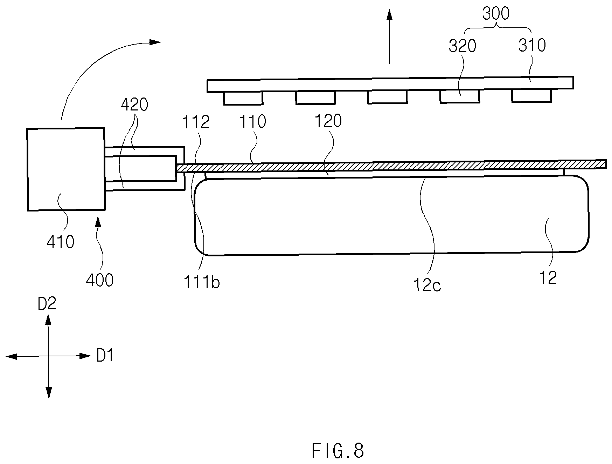

FIG. 8 is a diagram showing that the separation gripper of the tape supply unit according to the first embodiment of the present disclosure separates the release sheet from the adhesive tape.

Referring to FIG. 8, when the vacuum suction unit 300 is moved away from the release sheet 110, the separation gripper 400 may grip the release sheet 110 and separate it from the adhesive tape 120. Specifically, the separation gripper 400 may separate the release sheet 110 from the adhesive tape 120 by moving while gripping the second area 111b of one surface of the release sheet 110 and the other surface 112 of the release sheet.

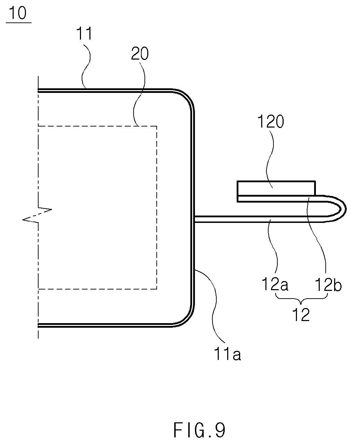

FIG. 9 is a diagram showing the adhesive tape attached to the sealing portion in the tape supply unit according to the first embodiment of the present disclosure.

Referring to FIG. 9, the adhesive tape 120 from which the release sheet 110 has been separated may be in a state of being attached (transferred) to the sealing portion 12. In this instance, when the sealing portion 12 is folded and pressed by a pressing unit 500 as described below, the adhesive tape 120 of the sealing portion 12 may be attached to the pouch body 11.

The tape supply unit 1 according to the first embodiment of the present disclosure may simplify the structure of the apparatus for attaching the adhesive tape 120 to the sealing portion 12, thereby simplifying the process for attaching the adhesive tape 120. In addition, the tape supply unit 1 according to the first embodiment of the present disclosure has an effect of increasing the efficiency of the process for attaching the adhesive tape 120, thereby reducing the amount of the adhesive tape 120 used and preventing errors in attaching the adhesive tape 120.

### (Second embodiment)

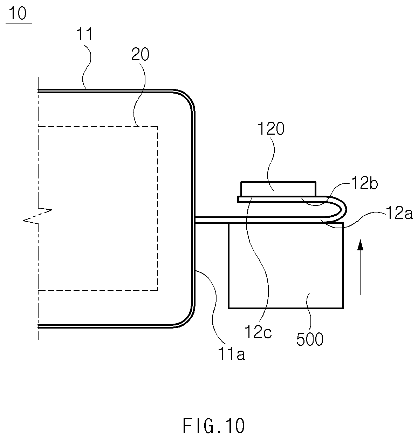

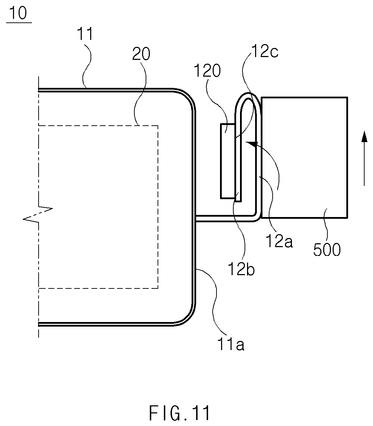

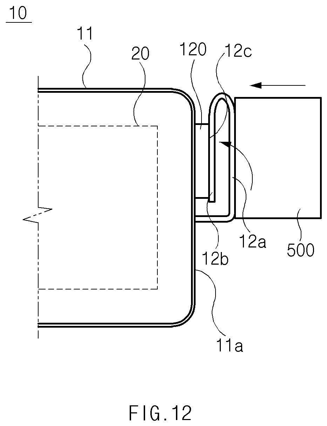

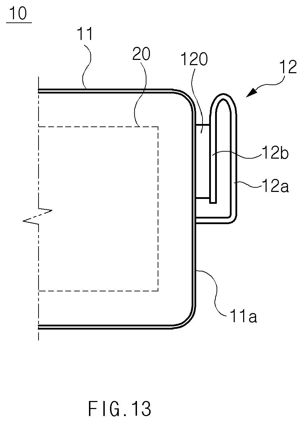

FIG. 10 is a diagram illustrating the pressing unit of an apparatus for manufacturing a pouch for a secondary battery according to a second embodiment of the present disclosure, FIG. 11 is a diagram showing that the pressing unit moves up to bend a first sealing portion in FIG. 10, FIG. 12 is a diagram showing that the pressing unit moves toward the pouch body to attach the adhesive tape to the pouch body in FIG. 11 and FIG. 13 is a diagram illustrating the pouch for the secondary battery manufactured by the apparatus for manufacturing the pouch for the secondary battery according to the second embodiment of the present disclosure.

Referring to FIGS. 10 to 13, the apparatus for manufacturing the pouch for the secondary battery according to the second embodiment of the present disclosure may be configured to manufacture the pouch 10 for the secondary battery including the pouch body 11 accommodating the electrode assembly 20 and the sealing portion 12 disposed at the pouch body 11, and include the tape supply unit 1 and the pressing unit 500.

In this instance, the tape supply unit 1 of the apparatus for manufacturing the pouch for the secondary battery according to the second embodiment of the present disclosure may be the tape supply unit 1 according to the first embodiment of the present disclosure. Accordingly, for the description of the tape supply unit 1 of the apparatus for manufacturing the pouch for the secondary battery according to the second embodiment of the present disclosure as described below, reference may be made to the description of the tape supply unit 1 according to the first embodiment of the present disclosure.

The pressing unit 500 may press the sealing portion 12 to attach the other surface 122 of the adhesive tape to the pouch body 11 in a state that one surface 121 of the adhesive tape is attached to the sealing portion 12 by the tape supply unit 1.

The apparatus for manufacturing the pouch for the secondary battery according to the second embodiment of the present disclosure may be used to fold and bond the sealing portion 12 of the pouch 10, and the present disclosure is not limited or restricted by the type and structure of the pouch 10 used in the apparatus for manufacturing the pouch for the secondary battery.

The pouch 10 may be provided with various structures including the pouch body 11 and the sealing portion 12.

The pouch body 11 is provided to accommodate the electrode assembly 20 and wrap around the entire electrode assembly 20.

The pouch body 11 may be provided with various structures for accommodating the electrode assembly 20, and the present disclosure is not limited or restricted by the structure and shape of the pouch body 11.

As an example, the pouch body 11 may be provided by joining a lower sheet (not shown) and an upper sheet (not shown), each sheet having a roughly rectangular shape, and an accommodation space for accommodating the electrode assembly 20 may be defined between the lower sheet and the upper sheet.

Although the embodiment of the present disclosure described and illustrated above describes the pouch body 11 having the roughly rectangular shape by way of example, according to another embodiment of the present disclosure, the pouch body may have a circular shape or any other shape.

In addition, the pouch body 11 may be formed with a structure including a metal layer, for example, an aluminum thin film, in order to protect the components such as an electrolyte solution injected inside, enhance electrical and chemical properties by the electrode assembly 20 and the electrolyte solution and increase heat dissipation.

The electrode assembly 20 may include an electrode (not shown) and a separator (not shown) stacked on the electrode. As an example, the electrode may include a first electrode (for example, a positive electrode) stacked on one surface (for example, an upper surface) of the separator, and a second electrode (for example, a negative electrode) stacked on the other surface (for example, a lower surface) of the separator.

The sealing portion 12 may be formed by joining the sides (edges) of the lower sheet and the upper sheet that form the pouch body 11, and protrudes from a side 11a of the pouch body.

For example, the sealing portion 12 may be formed along three or four sides of the pouch body 11. According to another embodiment of the present disclosure, the sealing portion 12 may be formed along one or two sides of the pouch body.

The sealing portion 12 may include a first sealing portion 12a and a second sealing portion 12b.

The first sealing portion 12a may protrude from the pouch body 11 along the first direction D1 (horizontal direction).

The second sealing portion 12b may be folded from the first sealing portion 12a, and the target adhesive surface 12c may be present on the second sealing portion 12b.

The target adhesive surface 12c may refer to a surface of the sealing portion 12 where the adhesive tape 120 will be attached. Specifically, the target adhesive surface 12c may be located at the second sealing portion 12b.

The apparatus for manufacturing the pouch for the secondary battery according to the second embodiment of the present disclosure may further include the separation gripper 400 to separate the release sheet 110 attached to the other surface 122 of the adhesive tape from the adhesive tape 120 in a state that one surface 121 of the adhesive tape is attached to the sealing portion 12.

After the release sheet 110 is separated from the adhesive tape 120 by the separation gripper 400, the pressing unit 500 may press the sealing portion 12 to attach the adhesive tape 120 to the pouch body 11.

Specifically, in a state that one surface 121 of the adhesive tape is attached to the sealing portion 12, the pressing unit 500 may fold the sealing portion 12 so that the other surface 122 of the adhesive tape faces the pouch body 11, and bring the sealing portion 12 into close contact with the pouch body 11 to attach the other surface 122 of the adhesive tape to the pouch body 11.

More specifically, when the pressing unit 500 folds the first sealing portion 12a, the target adhesive surface 12c on the second sealing portion 12b may face the pouch body 11. Specifically, when the pressing unit 500 presses the sealing portion 12 in the second direction D2, the sealing portion 12 may be folded into an L-shape.

When the first sealing portion 12a is in the bent state, the pressing unit 500 may press the first sealing portion 12a in a direction that gets closer to the pouch body 11. Specifically, the pressing unit 500 may press the sealing portion 12 in the first direction D1 to bring the target adhesive surface 12c of the sealing portion 12 closer to the pouch body 11.

The pressing unit 500 may press the sealing portion 12 with the movement in the first direction D1 and/or the second direction D2. The linear movement of the pressing unit 500 in the first direction D1 and/or the second direction D2 may be made in various ways depending on the required conditions and design specifications.

As an example, the linear movement of the pressing unit 500 in the first direction D1 and/or the second direction D2 may be made by a commonly used linear motion system such as a motor, a solenoid or a linear motor. According to another embodiment of the present disclosure, the pressing unit 500 may be configured to move in a straight line along the first direction D1 and/or the second direction D2 in response to a lead screw's rotation.

Although the embodiment of the present disclosure described and illustrated above describes folding the sealing portion 12 so that the sealing portion 12 includes the first sealing portion 12a and the second sealing portion 12b, and then folding again with the medium of the pressing unit 500 by way of example, according to another embodiment of the present disclosure, the pressing unit may be configured to fold the unfolded sealing portion (for example, the sealing portion including only the first sealing portion), or additionally fold the sealing portion that has been folded twice or more.

The apparatus for manufacturing the pouch for the secondary battery according to the second embodiment of the present disclosure has an effect of simplifying the structure of the manufacturing apparatus for performing the processes for folding and bonding the sealing portion 12 of the pouch 10, and minimizing the space occupied by the sealing portion 12, thereby improving space utilization and the degree of freedom in design.

### (Third embodiment)

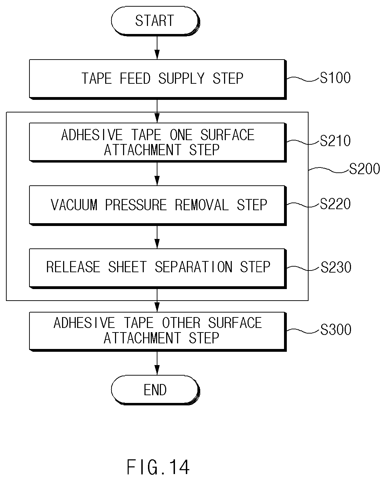

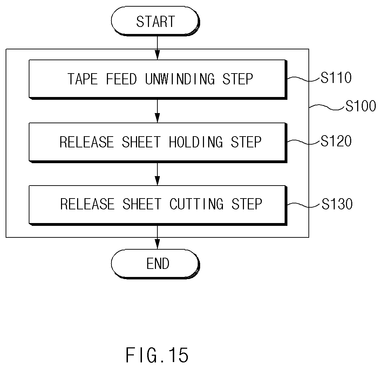

FIG. 14 is a flowchart of a method for manufacturing a pouch for a secondary battery according to a third embodiment of the present disclosure, and FIG. 15 is a flowchart of a tape feed unwinding step in the method for manufacturing the pouch for the secondary battery according to the third embodiment of the present disclosure.

Referring to FIGS. 14 and 15, the method for manufacturing the pouch for the secondary battery according to the third embodiment of the present disclosure is used to manufacture the pouch for the secondary battery 10 including the pouch body 11 accommodating the electrode assembly 20 and the sealing portion 12 disposed at the pouch body 11, and may attach the adhesive tape 120 to the sealing portion 12 using the tape supply unit 1 according to the first embodiment of the present disclosure.

The method for manufacturing the pouch for the secondary battery according to the third embodiment of the present disclosure may include the tape feed supply step (S100) of supplying the tape feed 100 including the adhesive tape 120 and the release sheet 110 having one surface 111 to which the adhesive tape 120 is attached, the adhesive tape transfer step (S200) of holding, by the vacuum suction unit 300, the other surface 112 of the release sheet with vacuum and moving it to the sealing portion 12 to attach one surface 121 of the adhesive tape to the sealing portion 12, and the adhesive tape other surface attachment step (S300) of pressing the sealing portion 12 to attach the other surface 122 of the adhesive tape to the pouch body 11 in a state that one surface 121 of the adhesive tape is attached to the sealing portion 12.

In this instance, the tape feed supply step (S100) may include the tape feed unwinding step (S110) for unwinding the wound tape feed 100, the release sheet holding step (S120) for holding, by the vacuum suction unit 300, the other surface 112 of the release sheet with vacuum, and the release sheet cutting step (S130) for cutting, by the cutter 230, the release sheet 110 in a state that the other surface 112 of the release sheet 110 is held with vacuum by the vacuum suction unit 300.

In addition, the adhesive tape transfer step (S200) may include the adhesive tape one surface attachment step (S210) of holding, by the vacuum suction unit 300, the other surface of the release sheet 110 with vacuum and transporting it to the sealing portion 12 to attach one surface 121 of the adhesive tape to the sealing portion 12, the vacuum pressure removal step (S220) of removing the vacuum pressure applied to the other surface 112 of the release sheet, and the release sheet separation step (S230) of separating the release sheet 110 from the adhesive tape 120 in a state that one surface 121 of the adhesive tape 120 is attached to the sealing portion 12.

The method for manufacturing the pouch for the secondary battery according to the third embodiment of the present disclosure has an effect of simplifying the manufacturing method for performing the processes for folding and bonding the sealing portion 12 of the pouch 10, and minimizing the space occupied by the sealing portion 12, thereby improving space utilization and the degree of freedom in design.

Although the present disclosure has been hereinabove described with regard to a certain number of embodiments and drawings, the present disclosure is not limited thereto, and the present disclosure may be embodied in different forms by persons having ordinary skill in the technical field pertaining to the present disclosure within the technical scope of the present disclosure and the appended claims and their equivalents.

### [List of Reference Numerals]

| | | | |
|---|---|---|---|
| 1: | Tape supply unit | 100: | Tape feed |
| 110: | Release sheet | 120: | Adhesive tape |
| 200: | Tape feed supply unit | 210: | Supply roll |
| 220: | Unwinding gripper | 221: | Unwinding gripper body |
| 222: | Unwinding grip member | 230: | Cutter |
| 300: | Vacuum suction unit | 310: | Suction unit body |
| 320: | Suction pad | 400: | Separation gripper |
| 410: | Separation gripper body | 420: | Separation grip member |
| 500: | Pressing unit | | |

## Claims

1. A tape supply unit for supplying an adhesive tape for attaching a sealing portion to a pouch body accommodating an electrode assembly, the tape supply unit comprising:
a tape feed supply unit configured to supply a tape feed including the adhesive tape and a release sheet to which the adhesive tape is attached; and
a vacuum suction unit configured to hold the release sheet with vacuum and move it to the sealing portion to attach the adhesive tape to the sealing portion.

2. The tape supply unit according to claim 1,
wherein the adhesive tape is attached to one surface of the release sheet, and
wherein the vacuum suction unit holds other surface of the release sheet with vacuum.

3. The tape supply unit according to claim 2,
wherein the tape feed supply unit includes:
a supply roll on which the tape feed is wound; and
an unwinding gripper configured to unwind the tape feed by moving while gripping an end of the tape feed wound onto the supply roll.

4. The tape supply unit according to claim 3,
wherein the tape feed supply unit further includes:
a cutter configured to cut the unwound tape feed to separate it from the supply roll in a state that the vacuum suction unit holds the release sheet with vacuum.

5. The tape supply unit according to claim 4,
wherein said one surface of the release sheet is divided into a first area where the adhesive tape is attached and a second area which is an area other than the first area, and
wherein the cutter cuts the second area.

6. The tape supply unit according to claim 2,
wherein said one surface of the adhesive tape is attached to the sealing portion, and
wherein the other surface of the adhesive tape is attached to one surface of the release sheet.

7. The tape supply unit according to claim 6, further comprising:
a separation gripper configured to separate the release sheet attached to the other surface of the adhesive tape from the adhesive tape in a state that said one surface of the adhesive tape is attached to the sealing portion.

8. The tape supply unit according to claim 7,
wherein said one surface of the release sheet is divided into a first area where the adhesive tape is attached and a second area which is an area other than the first area, and
wherein the separation gripper separates the release sheet from the adhesive tape by moving while gripping the second area and the other surface of the release sheet.

9. The tape supply unit according to claim 1,
wherein in a state that the vacuum suction unit holds the release sheet with vacuum,
the vacuum suction unit is disposed such that it extends in a direction parallel to a length direction of the release sheet.

10. The tape supply unit according to claim 1,
wherein the vacuum suction unit includes:
a plurality of suction pads arranged at a preset interval along a direction parallel to a length direction of the release sheet and configured to apply a vacuum pressure to the release sheet.

11. The tape supply unit according to claim 10,
wherein the vacuum pressure applied to the release sheet is removed when the adhesive tape is attached to the sealing portion.

12. An apparatus for manufacturing a pouch for a secondary battery including a pouch body accommodating an electrode assembly and a sealing portion disposed at the pouch body, the apparatus comprising:
a tape supply unit configured to supply an adhesive tape for attaching the sealing portion to the pouch body; and
a pressing unit configured to press the sealing portion to attach other surface of the adhesive tape to the pouch body in a state that one surface of the adhesive tape is attached to the sealing portion by the tape supply unit,
wherein the tape supply unit includes:
a tape feed supply unit configured to supply a tape feed including the adhesive tape and a release sheet to which the adhesive tape is attached; and
a vacuum suction unit configured to hold the release sheet with vacuum and move it to the sealing portion to attach the adhesive tape to the sealing portion.

13. The tape supply unit according to claim 12, further comprising:
a separation gripper configured to separate the release sheet attached to the other surface of the adhesive tape from the adhesive tape in a state that said one surface of the adhesive tape is attached to the sealing portion.

14. The apparatus for manufacturing the pouch for the secondary battery according to claim 13,
wherein in a state that said one surface of the adhesive tape is attached to the sealing portion, the pressing unit folds the sealing portion so that the other surface of the adhesive tape faces the pouch body, and brings the sealing portion into close contact with the pouch body to attach the other surface of the adhesive tape to the pouch body.

15. A method for manufacturing a pouch for a secondary battery including a pouch body accommodating an electrode assembly and a sealing portion disposed at the pouch body, the method comprising:
a tape feed supply step of supplying a tape feed including an adhesive tape and a release sheet having one surface to which the adhesive tape is attached; and
an adhesive tape transfer step of holding, by a vacuum suction unit, other surface of the release sheet with vacuum and moving it to the sealing portion to attach one surface of the adhesive tape to the sealing portion.

16. The method for manufacturing the pouch for the secondary battery according to claim 15, further comprising:
an adhesive tape other surface attachment step of pressing the sealing portion to attach other surface of the adhesive tape to the pouch body in a state that said one surface of the adhesive tape is attached to the sealing portion.

17. The method for manufacturing the pouch for the secondary battery according to claim 15,
wherein the tape feed supply step comprises:
a tape feed unwinding step of unwinding the wound tape feed;
a release sheet holding step of holding, by the vacuum suction unit, the other surface of the release sheet with vacuum; and
a release sheet cutting step of cutting the release sheet in a state that the other surface of the release sheet is held with vacuum.

18. The method for manufacturing the pouch for the secondary battery according to claim 15,
wherein the adhesive tape transfer step comprises:
an adhesive tape one surface attachment step of holding, by the vacuum suction unit, the other surface of the release sheet with vacuum and transporting it to the sealing portion to attach said one surface of the adhesive tape to the sealing portion; and
a vacuum pressure removal step of removing a vacuum pressure applied to the other surface of the release sheet.

19. The method for manufacturing the pouch for the secondary battery according to claim 18,
wherein the adhesive tape transfer step further comprises:
a release sheet separation step of separating the release sheet from the adhesive tape in a state that said one surface of the adhesive tape is attached to the sealing portion.
